# EUROPEAN PATENT APPLICATION

(11) **EP 1 713 271 A1**
(43) Date of publication of application: **18.10.2006**
(21) Application number: 06100812.4
(22) Date of filing: 25.01.2006
(51) Int. Cl.: H04N 7/10, H04N 5/44

(54) **Digital to analog television signal converter**

(30) Priority: 15.04.2005 IT TV20050049
(71) Applicant: Syen S.r.l., 31033 Castelfranco Veneto TV (IT)
(72) Inventor: Cusinato, Andrea, 31033 Castelfranco Veneto TV (IT)
(74) Representative: Modiano, Micaela Nadia

(57) **Abstract**

A digital to analog converter (1), particularly for radio and television signals, comprising a plurality of receivers (10, 11), each receiver comprising tuning means (2) adapted to receive a digital television signal (6), decoding/demodulation means (3) adapted to convert the digital television signal (6) into a video and audio signal, modulation means (4) adapted to remodulate the video and audio signal in the analog television standard, mixing means (5) adapted to mix the already-modulated signal that arrives from an upstream receiver (10, 11) with the modulated signal that arrives from the modulation means, and adapted to emit in output an analog radiofrequency signal, each receiver (10, 11) being adapted to receive a configurable digital channel.

## Description

The present invention relates to a digital to analog converter particularly for television signals and the like.

More particularly, the invention relates to a digital to analog converter for television signals in digital format, in order to be able to use with digital television signals the analog television sets and video recorders currently in use.

As it is known, digital terrestrial television is about to replace analog television, which up to now has been used worldwide.

In the analog radio and television system, an analog signal is received by the antenna and is then displayed by means of a television set or video recorder provided with an adapted tuner.

Currently available television sets and video recorders are not compatible with the new digital terrestrial standard. Currently, in order to receive the digital terrestrial signal so as to view it with ordinary radio and television sets, it is necessary to use an apparatus known as decoder, which converts the digital signal into a video signal, for example of the PAL type, which is transmitted via the SCART socket of the television set, or into a radiofrequency signal with a standard which is compatible with the sets, by means of a coaxial cable to be connected to the aerial socket of the television set.

The drawback is that at present it is necessary to have, for each television set, an appropriate decoder in order to be able to receive different channels on different television sets.

In practice, it is possible to use a single decoder connected to all the television sets of a home, but with the constraint of receiving the same channel on all of said television sets.

Further, it would not be possible to record, by means of a video recorder, a different channel with respect to the television set.

It is therefore evident that the onset of digital television poses serious drawbacks as regards the television sets and video recorders currently in use, substantially forcing the replacement of current television sets with models capable of receiving digital signals directly or the purchase of a decoder for each television set, so that one can see a specific channel on each television set instead of the same channel on all the television sets that might be connected to a single decoder.

The aim of the present invention is to provide a digital to analog converter particularly for television signals and the like, which allows to keep in use current television sets and video recorders, being able to receive simultaneously a number of digital channels with a single decoder.

Within this aim, an object of the present invention is to provide a digital to analog converter particularly for television signals which can be installed directly proximate to the receiving antenna.

Another object of the present invention is to provide a digital to analog converter which is of the modular type.

Another object of the present invention is to provide a digital to analog converter which is highly reliable, relatively simple to manufacture and at competitive costs.

This aim and these and other objects, which will become better apparent hereinafter, are achieved by a digital to analog converter, particularly for radio and television signals, characterized in that it comprises a plurality of receivers, each receiver comprising tuning means adapted to receive a digital television signal, decoding/demodulation means adapted to convert said digital television signal into a video and audio signal, modulation means adapted to remodulate said video and audio signal in the analog television standard, mixing means adapted to mix the already-modulated signal that arrives from an upstream receiver with the modulated signal that arrives from the modulation means, and adapted to emit in output an analog radiofrequency signal, each receiver being adapted to receive a configurable digital channel.

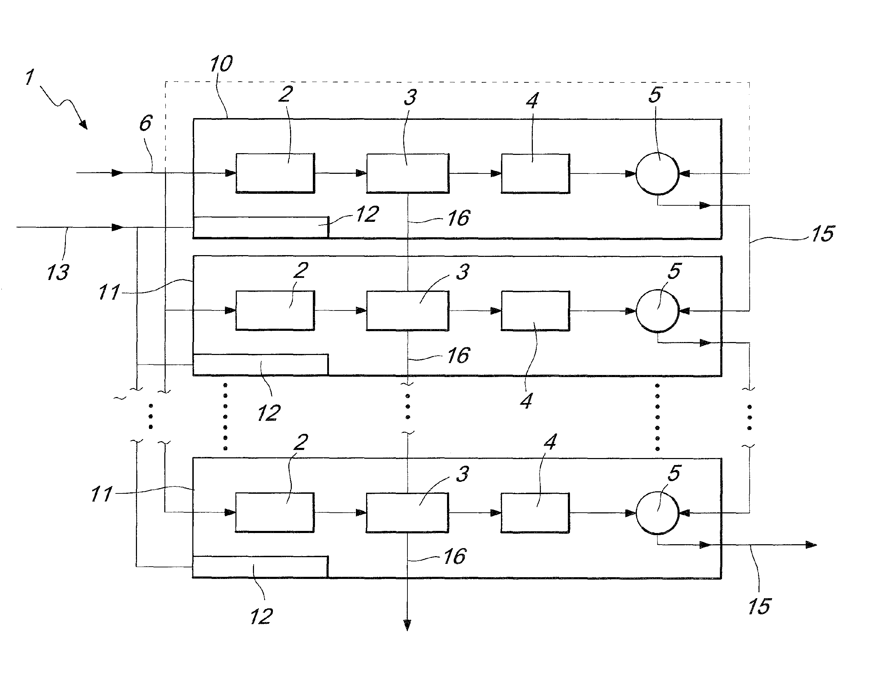

Further characteristics and advantages of the invention will become better apparent from the description of a preferred but not exclusive embodiment of the converter according to the present invention, illustrated by way of non-limiting example in the accompanying drawing, wherein the only figure is a block diagram of the converter according to the present invention.

With reference to the figure, a converter according to the present invention, generally designated by the reference numeral 1, comprises a plurality of receivers, each receiver comprising tuning means 2 adapted to receive in input a digital terrestrial television signal, which are connected to decoding/demodulation means 3, which in turn are connected to modulation means 4. The decoding/demodulation means 2 convert the digital signal in input into a video signal, for example in the PAL standard, and baseband audio, the audio and video outputs of which are connected to the modulation means 4, which remodulate the video and audio signals in the analog television standard (for example of the B and G type). The modulation means 4 are connected to filter/mixing means 5, which are adapted to suppress the channel on which the modulation means 4 modulate and to mix the already-modulated signal that arrives from the preceding receiver with the signal modulated by the modulation means 4.

Substantially, the filter/mixing means 5 allow to mix the signal already modulated by a preceding receiver with the signal modulated by the modulation means 4.

As it can be seen from the figure, there is therefore a receiver, designated by the reference numeral 10, which is known as "master" and to which a plurality of receivers, similar to the master receiver, are connected in a cascade configuration.

The filter/mixing means 5 of each receiver which follows the master receiver (the receivers that follow the master receiver are designated by the reference numeral 11) receive in input the modulated signal of the modulation means 4 as well as the output signal from the filter/mixing means 5 of the preceding receiver.

The master receiver 10 instead receives in input to the filter/mixing means 4 directly the digital television signal 6, which is also input to the tuning means 2.

The digital television signal 6 is then fed to all the tuning means 2 of each receiver 11, which are cascade-connected to the master receiver.

Each receiver 10 or 11 is further provided with its own power supply means 12, which are adapted to be connected to the power supply mains 13.

The output of all the filter/mixing means 5 of each receiver 10 or 11 is an analog television signal 15, which constitutes the input of the filter/mixing means 5 of a subsequent receiver 11, or constitutes the final output to be sent over a coaxial cable for transmission to the radio and television sets.

The decoding/demodulation means 3 can be connected to each other by means of a digital communications bus 16 for system management, for example for the digital channels to be received and the analog channels onto which the signals are to be retransmitted.

The communications bus 16 is optional, since each individual block, i.e., each individual receiver 10 or 11, is capable of operating autonomously.

Each receiver 10 or 11 can receive a digital channel which can be configured by the installer, which is then retransmitted, with an analog television standard, over a coaxial cable on a channel which also can be configured by the installer. The system can be extended in terms of the number of channels by connecting a plurality of receivers 10, 11, which must receive a certain number of digital channels which can be configured to be then retransmitted over the same coaxial cable as the other receivers.

In practice it has been found that the converter according to the present invention fully achieves the intended aim and objects, since it allows to reuse the analog radio and television receiver currently in use, although the television system is converted to digital, and allows to receive simultaneously a number of digital channels with said television sets by using a single decoder.

The converter thus conceived is susceptible of numerous modifications and variations, all of which are within the scope of the appended claims; all the details may further be replaced with other technically equivalent elements.

The disclosures in Italian Patent Application No. TV2005A000049 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A digital to analog converter (1), particularly for radio and television signals, **characterized in that** it comprises a plurality of receivers (10, 11), each receiver comprising tuning means (2) adapted to receive a digital television signal (6), decoding/demodulation means (3) adapted to convert said digital television signal into a video and audio signal, modulation means (4) adapted to remodulate said video and audio signal in the analog television standard, mixing means (5) adapted to mix the already-modulated signal that arrives from an upstream receiver with the modulated signal that arrives from the modulation means (4), and adapted to emit in output an analog radiofrequency signal (15), each receiver being adapted to receive a configurable digital channel.

2. The converter according to claim 1, **characterized in that** each one of said receivers (10, 11) comprises power supply means (12) adapted to be supplied with mains power.

3. The converter according to claim 1, **characterized in that** said decoding/demodulation means (3) of each receiver (10, 11) are connected to each other by means of a bus (16).

4. The converter according to one or more of the preceding claims, **characterized in that** said mixing means (5) of a main receiver (10) among said receivers receive in input said digital signal in addition to the signal in output from said modulation means (4).

5. The converter according to one or more of the preceding claims, **characterized in that** said plurality of receivers (10, 11) are connected in a cascade configuration, said digital signal (6) being input to the tuning means (2) of each one of said receivers (10, 11).

6. The converter according to one or more of the preceding claims, **characterized in that** the analog radiofrequency signal (15) in output from said mixing means is conveyed, at the last receiver (11) of the receivers connected in a cascade configuration, over a common coaxial aerial cable.

7. The converter according to one or more of the preceding claims, **characterized in that** said mixing means (5) are adapted to suppress the channel on which said mixing means (5) modulate.

8. A receiver (10, 11) for the digital to analog conversion of a television signal, **characterized in that** it comprises tuning means (2) adapted to receive in input a digital signal (6); decoding/demodulation means (3) adapted to convert said digital signal into an analog video and audio signal; modulation means (4) adapted to remodulate said video and audio signal in the analog television standard; and mixing means (5), which are adapted to receive in input the signal in output from said modulation means (4) and to mix it with an input signal which arrives from mixing means (5) of a receiver (11) arranged upstream.
